# FASCICULE DE BREVET EUROPEEN

(11) **EP 4 078 412 B1**
(45) Date de publication et mention de la délivrance du brevet: **26.08.2026**
(21) Numéro de dépôt: 20810986.8
(22) Date de dépôt: 25.11.2020
(51) Int. Cl.: G06F 21/32, G06F 21/35, H04L 9/32, H04L 9/08, G07C 9/25, G06Q 10/10, G06Q 50/26

(54) **PROCÉDÉ ET SYSTÈME DE LECTURE D'UN ENSEMBLE DE DONNÉES CONTENUES DANS UN DOCUMENT D'IDENTITÉ**
VERFAHREN UND SYSTEM ZUM LESEN EINES DATENSATZES IN EINEM IDENTITÄTSDOKUMENT
METHOD AND SYSTEM FOR READING A DATA RECORD CONTAINED IN AN IDENTITY DOCUMENT

(30) Priorité: 18.12.2019 FR 1914710
(43) Date de publication de la demande: 26.10.2022
(73) Titulaire: Imprimerie Nationale, 75116 Paris (FR)
(72) Inventeur: BERT, Maxime, 59128 FLERS EN ESCREBIEUX (FR)
(74) Mandataire: Brun, Philippe Alexandre Georges
(86) Numéro de dépôt international: PCT/EP2020/083422
(87) Numéro de publication internationale: WO 2021/121892

(56) Documents cités:
- WO-A1-2009/002139
- WO-A1-2019/147120
- US-A1- 2015 281 232

## Description

L'invention concerne un procédé et un système permettant de lire de manière rapide et facile des informations contenues dans un document d'identité contenant des données d'identité. Ces informations sont mémorisées dans la puce électronique d'un document et sont accessibles via une clé générée à partir de données imprimées sur le document. L'invention permet de générer, à partir d'une lecture optique de la bande MRZ (Machine-Readable Zone) imprimée sur un passeport ou sur une carte d'identité ou tout autre support, une donnée chiffrée qui va être mémorisée par le titulaire du document d'identité et qui sera utilisée par ce dernier pour accéder de manière plus rapide et plus fiable aux informations contenues dans la puce électronique.

Les bandes de lecture optique de type MRZ (Machine Readable Zone) sont largement utilisées pour contrôler l'identité d'une personne porteuse d'un document sur lequel est imprimée cette information. Un dispositif de lecture approprié va scanner la bande MRZ. La clé dérivée des données MRZ permet d'initier les mécanismes d'un protocole d'échange qui va conduire à un contrôle d'identité de la personne. La lecture des données MRZ est impossible à toute personne qui n'a pas en main le document ou qui n'est pas à proximité de ce document. Ce type de données offre donc une sécurité élevée.

Le contrôle d'identité nécessite de récupérer les données permettant de générer la clé d'accès à la puce électronique du document avant chaque accès à la puce. Il faut donc lire la bande MRZ, ce qui permettra de générer une clé pour accéder aux données contenus dans la puce. Le processus de lecture (scan) de la bande MRZ, peut conduire à un processus relativement long, et/ ou à des erreurs de lecture de la bande MRZ.

Différentes méthodes pour lire la bande MRZ sont connues de l'art antérieur. A la connaissance du demandeur, aucune de ces méthodes ne présente une solution qui permettrait une lecture des informations contenues dans la bande MRZ, ou de données équivalentes (ayant une fonction semblable ou similaire) de manière rapide et en minimisant le risque d'erreurs de lecture. Le document de l'art antérieur US 2015/281232 A1divulgue un système de déchiffrement permettant de déchiffrer des informations d'identification d'utilisateur chiffrées sur un dispositif de stockage associé à une pièce d'identité d'un utilisateur. Ledit système comprend un serveur conçu pour collecter les données de la pièce d'identité d'un utilisateur auprès de cet utilisateur et pour construire un jeton comprenant les données de la pièce d'identité de l'utilisateur codées sous une forme lisible par une machine.

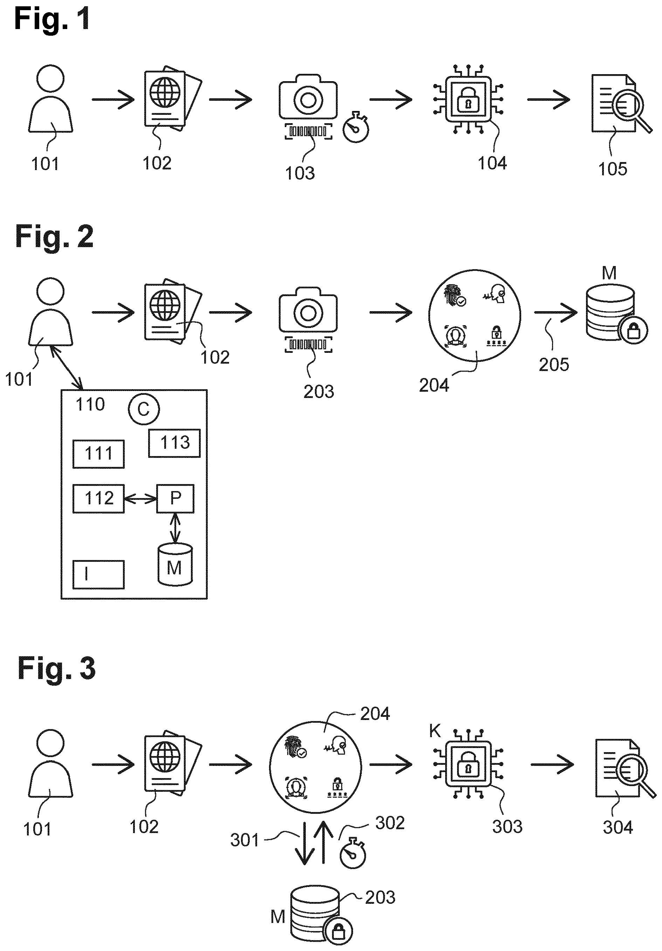

La figure 1 illustre les étapes de lecture d'une bande MRZ selon l'art antérieur. Le titulaire 101 d'un passeport 102 soumet la bande MRZ à un lecteur optique 103 associé à un dispositif de traitement des données 104 qui va générer une clé K permettant d'accéder aux informations contenues dans la puce 105.

Un des objectifs de la présente invention est d'offrir un système et un procédé de lecture de données contenues dans une bande de type MRZ, ou tout autre ensemble de données équivalentes imprimées sur un document, de manière plus rapide et en minimisant les risques d'erreurs de lecture. L'invention repose donc sur une nouvelle approche qui va consister à « lire », non plus directement les données d'une bande de type MRZ, mais un attribut associé à ces données qui sera mémorisé, par exemple, dans un terminal détenu par le titulaire du document, tel qu'un téléphone mobile ou une tablette ou encore dans une mémoire d'un ordinateur.

Le mot attribut désigne, dans la présente invention, des informations chiffrées qui peuvent être retrouvées à partir d'une donnée personnelle, un mot de passe, ou une donnée biométrique telle qu'une empreinte digitale, la voix, des données du visage, etc.

L'invention concerne un procédé permettant au titulaire d'un document contenant des données personnelles et équipé d'un composant électronique P stockant des données d'identité du titulaire, de s'identifier auprès d'un service caractérisé en ce qu'il comporte au moins les étapes suivantes :
- Générer à partir des données d'identification imprimées sur le document, d'une donnée personnelle du titulaire et d'un module de chiffrement un attribut permettant d'accéder aux données contenues dans le composant électronique P,
- Mémoriser ledit attribut au niveau du titulaire du document d'identité,
- Suite à une requête Rq émise par le titulaire auprès du service S d'un serveur, le titulaire utilise l'attribut généré pour récupérer les données mémorisées dans le composant électronique P, sans lecture directe des données imprimées et attester de son identité auprès dudit service afin que ce dernier exécute le service demandé.

Les données d'identification imprimées correspondent, par exemple, à une bande MRZ imprimée sur le document.

Le titulaire peut utiliser comme donnée personnelle pour générer l'attribut, une empreinte digitale, sa voix ou encore un mot de passe.

On génère un attribut à partir d'une bande MRZ imprimée sur un passeport afin d'accéder à un service d'établissement d'un document utilisant des données d'identité stockées dans la puce du passeport.

L'invention concerne aussi un dispositif permettant à un titulaire d'un document contenant des données d'identification imprimées et des données d'identité mémorisées dans un composant électronique P de générer un attribut permettant d'accéder rapidement aux données mémorisées dans le composant électronique P caractérisé en ce que :
- Le titulaire possède un terminal équipé :
- D'un dispositif de lecture C des données d'identification imprimées sur le document d'identité,
- D'un module configuré pour générer, à partir du résultat de lecture et d'une donnée personnelle, un attribut, ledit attribut étant mémorisé dans une zone mémoire M du terminal,
- D'un dispositif de lecture de la donnée personnelle utilisée pour générer l'attribut afin de récupérer l'attribut et d'accéder aux données mémorisées dans le composant électronique,
- D'un moyen de communication avec un serveur contenant le service S requis par le titulaire du document et requérant des informations sur les données d'identité stockées dans le composant électronique, ledit serveur étant configuré pour exécuter le service requis.

Le passeport est, par exemple, équipé d'une puce contenant des données d'identité et d'une bande MRZ imprimée sur le passeport.

Le terminal de l'individu peut être équipé d'un dispositif de lecture d'une donnée biométrique, telle qu'une empreinte, un visage.

Le terminal de l'individu est par exemple équipé d'une interface I permettant l'introduction d'un mot de passé.

D'autres caractéristiques, détails et avantages de l'invention ressortiront mieux à la lecture de la description faite en référence aux dessins annexés donnés à titre d'exemple non limitatifs et qui représentent, respectivement :
[Fig.1] Un schéma de principe de lecture d'une bande MRZ selon l'art antérieur,
[Fig.2] Une première phase du procédé d'enrôlement d'un individu,
[Fig.3] Une deuxième phase de lecture et de contrôle des informations d'identification d'un individu,
[Fig.4] Un schéma représentant un cas d'usage du procédé selon l'invention.

Afin de mieux faire comprendre l'invention, l'exemple détaillé est donné lorsque le titulaire souhaite accéder à un service de visa. Par exemple, le titulaire d'un passeport équipé d'une puce électronique demande l'établissement d'un visa qui nécessite au service concerné de connaître les données d'identité contenues dans le passeport.

Le titulaire 101 sera en mesure de fournir au service des visas, les informations nécessaires pour établir ce document. Pour cela, le téléphone 110 du titulaire est équipé d'un dispositif de lecture optique, par exemple une caméra C permettant de lire optiquement la bande MRZ, d'une application de lecture 111, d'une application 112 configurée pour chiffrer les données lues et générer un attribut correspondant, et d'une zone mémoire M afin de mémoriser l'attribut généré et chiffré. Le téléphone est équipé de moyens de communication 113, Bluetooth par exemple, ou Internet afin de dialoguer avec le service S requis. Le téléphone est équipé d'une interface I permettant la saisie d'un mot de passe, la lecture d'empreinte, par exemple.

Les informations d'identification sont à la fois imprimées sur la page de données du passeport, notamment sous la forme d'une bande MRZ qui peut être lue par reconnaissance de caractères et mémorisées dans la puce P du passeport. La lecture de la MRZ va permettre de générer la clé d'accès aux données stockées dans la puce P du passeport.

La figure 2 illustre une succession d'étapes permettant la génération d'un attribut par exemple une MRZ chiffrée. Lors de la première phase d'enrôlement ou de stockage de l'attribut, le passeport 102 d'un individu 101 va être scanné, 203, par exemple au moyen de la caméra C du téléphone portable et l'application de chiffrement va générer, 204, une MRZ chiffrée à partir d'une donnée personnelle. Cette MRZ chiffrée présente l'avantage d'être plus facile à lire avec moins de risques d'erreurs de lecture, plus rapide aussi. La MRZ chiffrée va être mémorisée, 205, par exemple dans une zone mémoire M du téléphone mobile 110. Ainsi, les informations contenues dans la bande MRZ sont associées à une MRZ chiffrée (attribut) stockée dans la zone mémoire M du téléphone mobile du titulaire.

La MRZ chiffrée peut être générée en utilisant une donnée personnelle permettant son authentification, par exemple, un mot de passe, ou une donnée biométrique, telle qu'une empreinte, la voix, la reconnaissance faciale ou tout autre paramètre permettant le chiffrement des données de la MRZ. La MRZ chiffrée peut donc être retrouvée à partir de la donnée personnelle utilisée lors de sa création.

La figure 3 illustre les étapes permettant à un titulaire de passeport de répondre à une demande d'un service S qui requiert des informations contenues dans le passeport. La donnée MRZ chiffrée est mémorisée dans le téléphone du titulaire du passeport. Le titulaire 101 accède à la donnée MRZ chiffrée mémorisée dans son téléphone mobile 301, par exemple, en utilisant une donnée personnelle 204, un mot de passe, la lecture de son empreinte, le son de sa voix, ou encore une reconnaissance faciale. Il récupère, 302, la donnée MRZ chiffrée. A partir des informations contenues dans la MRZ chiffrée, son application de chiffrement génère, 303, la clé d'accès K à la puce électronique de son passeport. L'utilisateur peut ainsi récupérer 304 les données stockées dans la puce via un canal de communication en champ proche ou NFC selon la norme ICAO connue du domaine technique, par exemple, et attester de la validité des informations présentes sur le passeport. L'individu a la possibilité de valider (certifier) les informations qu'il transmet au service d'établissement de visa.

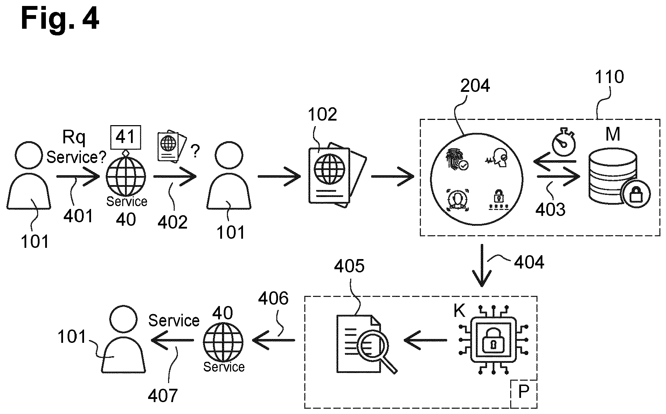

La figure 4 illustre un exemple d'utilisation du procédé selon l'invention pour l'établissement d'un visa à partir des données personnelles contenues dans le passeport.

Le système met en œuvre un serveur 40 qui est équipé de moyens de communication 41 pour échanger les données avec le téléphone mobile de l'utilisateur.

Le titulaire du passeport 101 transmet 401 une requête Rq d'établissement d'un visa auprès d'un service hébergé par un serveur 40. Le service visa demande 402 au titulaire de lui transmettre ses données d'identité afin de pouvoir établir le document. Le titulaire saisit un mot de passe via l'interface de son téléphone 110. Le mot de passe 204 permet de récupérer la clé K, 403, 404 qui va permettre d'accéder aux données d'identité mémorisées dans la puce du passeport 405, par exemple via un canal NFC selon la norme ICAO connus de l'homme du métier. Les données sont ensuite transmises, 406, au service de visa via une liaison Internet par exemple pour permettre l'établissement du visa, 407. Le service visa envoie le visa établi via une liaison Internet, par exemple.

Le titulaire du passeport va utiliser l'attribut généré à partir des données d'identification, pour récupérer les données mémorisées dans le composant électronique P, sans lecture directe des données imprimées en fonctionnement normal du procédé et attester de son identité auprès du serveur. Les étapes du procédé décrites précédemment peuvent fonctionner pour tout type de document ayant une information imprimée qui permet d'accéder aux données mémorisées dans un composant électronique enfoui dans un document, une carte d'identité avec puce, un badge d'identification au sein d'une entreprise, etc.

La description a été donnée dans le cadre d'un titulaire muni d'un téléphone mobile. Il peut sans sortir du cadre de l'invention, être équipé d'un terminal fixe, tel qu'un ordinateur équipé d'un lecteur de données imprimées sur son passeport ou sa carte d'identité, d'un processeur configuré pour exécuter les étapes du procédé et dialoguer avec un serveur d'un service de visa, etc. Le terminal fixe et/ou nomade comportera tous les modules et équipements listés précédemment pour la mise en œuvre de l'invention.

Le service peut être tout service administratif ou tout autre service requérant le contrôle de données d'identité, pour élaborer un document officiel à partir de données d'identité.

L'invention présente notamment l'avantage de faciliter la lecture de données d'identité contenues dans une puce avec un processus plus fiable, avec moins de risque d'erreurs de lecture et plus rapide. La génération d'un attribut associé à la bande MRZ et la mémorisation de cet attribut au niveau de dispositif du titulaire de la pièce d'identité évite une lecture directe de la bande MRZ pour identifier un individu.

## Revendications

1. Procédé permettant au titulaire (101) d'un document (102) contenant des données personnelles et équipé d'un composant électronique P stockant des données d'identité du titulaire, de s'identifier auprès d'un service **caractérisé en ce qu'**il comporte au moins les étapes suivantes :
- Générer à partir des données d'identification imprimées sur le document, d'une donnée personnelle du titulaire (204) et d'un module de chiffrement (112) un attribut permettant d'accéder aux données contenues dans le composant électronique P,
- Mémoriser (203) ledit attribut au niveau du titulaire (101) du document d'identité,
- Suite à une requête Rq émise (401) par le titulaire (101) auprès d'un service S d'un serveur (40), le titulaire (101) utilise l'attribut généré pour récupérer les données mémorisées dans le composant électronique P, sans lecture directe des données imprimées et attester de son identité auprès dudit serveur (40) afin que ce dernier exécute le service S demandé.

2. Procédé selon la revendication 1 **caractérisé en ce que** les données d'identification imprimées correspondent à une bande MRZ imprimée sur le document.

3. Procédé selon l'une des revendications 1 ou 2 **caractérisé en ce que** le titulaire utilise une empreinte digitale comme donnée personnelle pour générer l'attribut.

4. Procédé selon l'une des revendications 1 ou 2 **caractérisé en ce que** le titulaire utilise sa voix comme donnée personnelle pour générer l'attribut.

5. Procédé selon l'une des revendications 1 ou 2 **caractérisé en ce que** le titulaire utilise un mot de passe comme donnée personnelle pour générer l'attribut.

6. Procédé selon l'une des revendications 1 à 5 **caractérisé en ce que** l'on génère un attribut à partir d'une bande MRZ imprimée sur un passeport afin d'accéder à un service d'établissement d'un document utilisant des données d'identité stockées dans la puce du passeport.

7. Dispositif permettant à un titulaire (101) d'un document (102) contenant des données d'identification imprimées et des données d'identité mémorisées dans un composant électronique P de générer un attribut permettant d'accéder rapidement aux données mémorisées dans le composant électronique P **caractérisé en ce que** :
- Le titulaire possède un terminal (110) équipé :
• D'un dispositif de lecture C des données d'identification imprimées sur le document d'identité (102) et d'une application de lecture (111),
• D'un module de chiffrement (112) configuré pour générer, à partir du résultat de lecture et d'une donnée personnelle, un attribut, ledit attribut étant mémorisé dans une zone mémoire M du terminal,
• D'un moyen de communication (113) avec un serveur (40) contenant le service S requis par le titulaire du document et requérant des informations sur les données d'identité stockées dans le composant électronique, lesdites informations sur les données d'identité stockées dans le composant électronique étant récupérées dudit composant électronique en utilisant ledit attribut sans lecture directe des données imprimées, ledit serveur (40) étant configuré pour exécuter le service requis.

8. Dispositif selon la revendication 7 **caractérisé en ce que** le document est un passeport équipé d'une puce contenant des données d'identité et d'une bande MRZ imprimée sur le passeport.

9. Dispositif selon l'une des revendications 7 ou 8 **caractérisé en ce que** le terminal de l'individu est équipé d'un dispositif de lecture d'une donnée biométrique, telle qu'une empreinte, un visage.

10. Dispositif selon l'une des revendications 7 ou 8 **caractérisé en ce que** le terminal de l'individu est équipé d'une interface I permettant l'introduction d'un mot de passe.

## Patentansprüche

1. Verfahren, das es dem Inhaber (101) eines Dokuments (102), das personenbezogene Daten enthält und mit einer elektronischen Komponente P ausgestattet ist, die Identitätsdaten des Inhabers speichert, ermöglicht, sich bei einem Dienst zu identifizieren, **dadurch gekennzeichnet, dass** es mindestens die folgenden Schritte umfasst:
- Generieren, aus den auf dem Dokument gedruckten Identifikationsdaten, einer personenbezogenen Dateneinheit des Inhabers (204) und, aus einem Verschlüsselungsmodul (112), eines Attributs, das den Zugriff auf die in der elektronischen Komponente P enthaltenen Daten ermöglicht,
- Speichern (203) des Attributs bei dem Inhaber (101) des Identitätsdokuments,
- Nach einer Anforderung Rq, die durch den Inhaber (101) bei einem Dienst S eines Servers (40) ausgegeben wird (401), verwendet der Inhaber (101) das generierte Attribut, um die in der elektronischen Komponente P gespeicherten Daten ohne direktes Lesen der gedruckten Daten abzurufen und seine Identität bei dem Server (40) nachzuweisen, damit dieser den angeforderten Dienst S ausführt.

2. Verfahren nach Anspruch 1, **dadurch gekennzeichnet, dass** die gedruckten Identifikationsdaten einem auf das Dokument gedruckten MRZ-Streifen entsprechen.

3. Verfahren nach einem der Ansprüche 1 oder 2,
**dadurch gekennzeichnet, dass** der Inhaber einen Fingerabdruck als personenbezogene Dateneinheit verwendet, um das Attribut zu generieren.

4. Verfahren nach einem der Ansprüche 1 oder 2,
**dadurch gekennzeichnet, dass** der Inhaber seine Stimme als personenbezogene Dateneinheit verwendet, um das Attribut zu generieren.

5. Verfahren nach einem der Ansprüche 1 oder 2,
**dadurch gekennzeichnet, dass** der Inhaber ein Passwort als personenbezogene Dateneinheit verwendet, um das Attribut zu generieren.

6. Verfahren nach einem der Ansprüche 1 bis 5,
**dadurch gekennzeichnet, dass** ein Attribut aus einem auf einem Reisepass gedruckten MRZ-Streifen generiert wird, um auf einen Dienst für die Erstellung eines Dokuments zuzugreifen, der in dem Chip des Reisepasses gespeicherte Identitätsdaten verwendet.

7. Vorrichtung, die es einem Inhaber (101) eines Dokuments (102), das gedruckte Identifikationsdaten und in einer elektronischen Komponente P gespeicherte Identitätsdaten enthält, ermöglicht, ein Attribut zu generieren, das einen schnellen Zugriff auf die in der elektronischen Komponente P gespeicherten Daten ermöglicht, **dadurch gekennzeichnet, dass:**
- der Inhaber ein Endgerät (110) besitzt, ausgestattet mit:
• einer Lesevorrichtung C für die auf dem Identitätsdokument (102) gedruckten Identifikationsdaten und einer Leseanwendung (111),
• einem Verschlüsselungsmodul (112), das konfiguriert ist, um aus dem Leseergebnis und einer personenbezogenen Dateneinheit ein Attribut zu generieren, wobei das Attribut in einem Speicherbereich M des Endgeräts gespeichert ist,
• einem Kommunikationsmittel (113) mit einem Server (40), der den von dem Inhaber des Dokuments angeforderten Dienst S enthält und Informationen über die in der elektronischen Komponente gespeicherten Identitätsdaten anfordert, wobei die Informationen über die in der elektronischen Komponente gespeicherten Identitätsdaten unter Verwendung des Attributs ohne direktes Lesen der gedruckten Daten aus der elektronischen Komponente abgerufen werden, wobei der Server (40) konfiguriert ist, um den angeforderten Dienst auszuführen.

8. Vorrichtung nach Anspruch 7, **dadurch gekennzeichnet, dass** das Dokument ein Reisepass ist, der mit einem Identitätsdaten enthaltenden Chip und einem auf den Reisepass gedruckten MRZ-Streifen ausgestattet ist.

9. Vorrichtung nach einem der Ansprüche 7 oder 8,
**dadurch gekennzeichnet, dass** das Endgerät der Person mit einer Vorrichtung zum Lesen einer biometrischen Dateneinheit, wie eines Fingerabdrucks, eines Gesichts, ausgestattet ist.

10. Vorrichtung nach einem der Ansprüche 7 oder 8,
**dadurch gekennzeichnet, dass** das Endgerät der Person mit einer Schnittstelle I ausgestattet ist, welche die Eingabe eines Passworts ermöglicht.

## Claims

1. A method allowing the holder (101) of a document (102) containing personal data and equipped with an electronic component P that stores the holder's identity data to identify themselves to a service, **characterized in that** it comprises at least the following steps:
- Generating, on the basis of the identification data printed on the document, a piece of the holder's personal data (204), and an encryption module (112), an attribute allowing access to the data contained in the electronic component P,
- Memorizing (203) said attribute at the level of the holder (101) of the identity document,
- Following a request Rq sent (401) by the holder (101) to a service S of a server (40), the holder (101) uses the generated attribute to retrieve the data memorized in the electronic component P-without directly reading the printed data-and to authenticate the holder's identity to said server (40) so that the server can perform the requested service S.

2. The method according to claim 1, **characterized in that** the printed identification data correspond to an MRZ strip printed on the document.

3. The method according to one of claims 1 or 2, **characterized in that** the holder uses a fingerprint as personal data to generate the attribute.

4. The method according to one of claims 1 or 2, **characterized in that** the holder uses their voice as personal data to generate the attribute.

5. The method according to one of claims 1 or 2, **characterized in that** the holder uses a password as personal data to generate the attribute.

6. The method according to any of claims 1 to 5, **characterized in that** an attribute is generated from an MRZ strip printed on a passport in order to access a document issuance service using identity data stored in the passport's chip.

7. A device allowing a holder (101) of a document (102) containing printed identification data and identity data memorized in an electronic component P to generate an attribute allowing rapid access to the data memorized in the electronic component P, **characterized in that:**
- The holder has a terminal (110) equipped with:
• A reading device C for reading the identification data printed on the identity document (102) and a reading application (111),
• An encryption module (112) configured to generate, on the basis of the reading result and a piece of personal data, an attribute, said attribute being memorized in a memory area M of the terminal,
• A means of communication (113) with a server (40) that hosts the service S required by the document holder and requests information about the identity data stored in the electronic component, said information about the identity data stored in the electronic component being retrieved from said electronic component using said attribute without directly reading the printed data, said server (40) being configured to perform the requested service.

8. The device according to claim 7, **characterized in that** the document is a passport equipped with a chip containing identity data and an MRZ strip printed on the passport.

9. The device according to one of claims 7 or 8, **characterized in that** the individual's terminal is equipped with a device for reading a piece of biometric data, such as a fingerprint, a face.

10. The device according to one of claims 7 or 8, **characterized in that** the individual's terminal is equipped with an interface I allowing the entry of a password.
